# EUROPEAN PATENT APPLICATION

(11) **EP 4 454 809 A1**
(43) Date of publication of application: **30.10.2024**
(21) Application number: 24172375.8
(22) Date of filing: 25.04.2024
(51) Int. Cl.: B23Q 11/10

(54) **MACHINE TOOL WITH A COOLANT SUPPLY SYSTEM**

(30) Priority: 27.04.2023 DE 102023110951
(71) Applicant: ifm electronic gmbh, 45128 Essen (DE)
(72) Inventor: Buhl, Peter, 88079 Kressbronn (DE); Graca, Piotr, 47-180 Izbicko (PL)
(74) Representative: Ifm Patentabteilung

(57) **Abstract**

Machine tool with a coolant supply system comprises a coolant circuit transporting a fluid from a tank to the machine tool, with a pump as an actor and a flow meter as a sensor and a control system,
whereby the control system is connected to the machine tool and to at least to the one actor and at least to the one sensor, receiving sensor signals and generating control signals, whereby the control signal adjusted the pump performance according to the work task of the machine tool.

## Description

The present invention relates to a machine tool with a coolant supply system.

### Background of the invention

High-pressure pumps with pressure control are state-of-the-art for internal coolant supply in machine tools. It is well known that high pressure of the coolant is necessary to guaranty a good cutting process.

But this method is very energy consuming.

### General Disclosure of the invention

It is an object of the invention to provide a machine tool with a coolant supply system guarantying a good cutting process with less energy consumption.

The object is achieved by the features of claim 1.

Advantageous embodiments of the invention are given in the dependent claims.

The present disclosure relates to a machine tool with a coolant supply system, comprising a coolant circuit transporting a fluid from a tank to the machine tool, with a pump as an actor and a flow meter as a sensor and a control system,
whereby the control system is connected to the machine tool and to at least to the one actor and at least to the one sensor, receiving sensor signals and generating control signals, whereby the control signal adjusted the pump performance according to the work task of the machine tool,

The invention has the advantage to provide a machine tool with a coolant supply system guarantying a good cutting process with less energy consumption.

The present invention preferably provides a flow-controlled cutting fluid supply system, which allows cutting coolant to be supplied at reduced flow rates compared to a standard pressure-controlled fluid supply. As a result, this machine tool offers significant energy savings with lower fluid pump power consumption compared to pressure-controlled fluid supply systems. Moreover, experiments with the present machine tool have shown, that the quality of the workpiece and the service life of tools are not negatively affected by the lower cooling capacity.

The design of the control loop and its parameterization is very important in order to ensure a robust behavior over a broad range of cutting applications.

The work task is preferably dependent on the selected machining tool for a drilling and/or milling process, wherein the control system regulates the flow rate to the machine tool according to the selected drilling or milling tool and its predefined flow for cooling. In particular a tool with internal cooling channels

Preferably, a measuring range of the flow sensors is 1:400 and a flow control range is 1:400. In particular, the minimum controllable flow is 0,1l/Minute and the maximum controllable flow is 40l/Minute.

The design of the control loop and its parameterization is very important in order to ensure a robust behavior over a broad range of cutting applications.

In a preferred embodiment, the tool wear is reduced by regulating the flow rate to the machine tool, in particular by regulating a constant flow rate to the machine tool. The use of the preferred flow rate control enables a constant flow rate regardless of drilling depth and chip removal and, thus, a preferred constant cooling capacity.

In another preferred embodiment, the coolant circuit is connected after the pump with a connection line with a flow sensor and a controllable throttle for adjusting the flow to the tool machine in a range under a specific minimum flow value.

Preferably the machine tool is using a PI-controller, with a settling time less than 5 seconds. More preferably, the machine tool is using a PI-controller, with a settling time less than 3.5 seconds.

More preferably, multiple sensors are placed in series outside the machine tool, preferably in front of a double filter. In particular this position of sensors reduces effort for retrofitting. Moreover the multiple sensors have the advantage of providing a volume flow measurement input for the control system, to precisely control the coolant volume flow during machining. In particular multiple sensors have the advantage, that a measurement range of the volume flow measurement can be increased and/or a precision of the volume flow measurement can be improved.

According to a further embodiment, the coolant circuit comprises a bypass circuit with a pump, a relief valve, a flow sensor and a tank, wherein the bypass circuit is connected to a control system to set a predetermined volume flow dependent on a selected machining tool. In particular, the relief valve connects the pump with a tank as a bypass channel to set a volume flow, which is measured by the flow sensor in a second bypass channel. As a result, it is possible to set a defined volume flow by control of the relief valve and/or the pump. This has the advantage, that a precise volume flow can be set also outside a control range of the pump.

More preferably the multiple flow sensors are connected to the coolant circuit between the machine tool and the bypass circuit, in order to monitor and control the volume flow during processing of the machine tool. Preferably the coolant is fed to the machine tool and through the multiple flow sensors, in particular two sensors, once the machine tool is processing a work piece. This has the advantage, that a preset volume flow of the bypass circuit can precisely controlled also during processing of a workpiece by means of the multiple flow sensors.

In the following, the invention is explained in more detail with reference to the drawings by means of detailed embodiments.

### Brief description of the drawings

Fig. 1 machine tool with a coolant supply system according to an embodiment of the invention,
Fig. 2 shows a table with tools used in investigations of flow characteristics.
Fig. 3 depicts the progression of the width of flank wear land over the tool life travel path. The results indicate that the tool life is not significantly affected when the flow rate is reduced from 16.9 l/min (corresponds to set 80 bar) to 7.9 l/min.

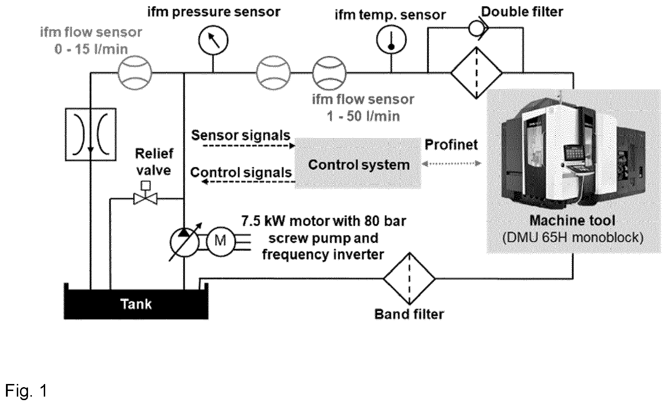

Referring to Fig. 1, an Arrangement for supplying a tooling machine with coolant lubricant arranged in a lubricant circuit is shown, wherein the lubricant circuit comprises a pump driven by a motor M which transports the coolant lubricant from a tank to a machine tool, in order to assure a constant and optimised cooling and lubrication of a tool and the contact surface with a processed material.

The lubricant circuit preferably comprises a bypass circuit, which has a pump, a flow sensor and a relief valve, wherein the cooling fluid can be fed back to a tank to preset a defined volume flow within the bypass circuit. This has the advantage that a predetermined volume flow can be set by means of a control system depending on the selected tool. As soon as the corresponding tool is inserted in the machine tool, the correct volume flow can be fed directly from the bypass circuit into the machine tool. The bypass circuit therefore has the advantage that the pump is not operated via a pressure control system but via a volume flow control system and energy consumption can be reduced thanks to the precise volume flow setting. Further flow sensors are preferably arranged downstream of a pressure sensor in a fluid line upstream of the machine tool in order to precisely measure the volume flow during the drilling process and a tool inserted in the machine tool and to control it by means of the control system.

Flow rate control takes place on an external IPC, which communicates with the machine tool via Profinet. The cycle time of the control is 10 ms and the sampling rate of the sensors is 200 Hz. By using an H-function, the desired flow rate can be specified in the NC-code. If a flow rate larger than 5 l/min is programmed, the controller uses only the pump to control the tool flow. If a flow smaller than 5 l/min is programmed, the controller uses the valve to control the differential flow rate in the bypass and the pump to control the flow in the tool. To determine the optimum sensor position, two identical sensors were first installed in the machine. Several tests were then carried out with these sensors and the sensors on the cutting fluid unit in order to analyze the differences between the sensor positions. However, no significant advantages of certain sensor positions could be identified. Thus, the sensors were placed outside the machine tool before the double filter. This also reduces effort for retrofitting. The developed control system and the sensor positions are depicted in Fig. 1. Using a PI-controller, a settling time less than 5 seconds especially of approx. 3.5 seconds is achieved. The power demand of the pump is recorded from the analog output of the frequency converter.

### 3. Control behavior of flow rate control

In order to enable an energy efficient supply of cutting fluid, tool-specific correlations between flow rate and energy demand should be known. Section 3.1 describes and compares flow characteristics of various drilling and milling tools. Based on these characteristic curves an initial working point for the control of the flow rate is defined. In section 3.2, the control behavior of the flow rate control is analyzed for a deep drilling process.

### 3.1. Identification of tool flow

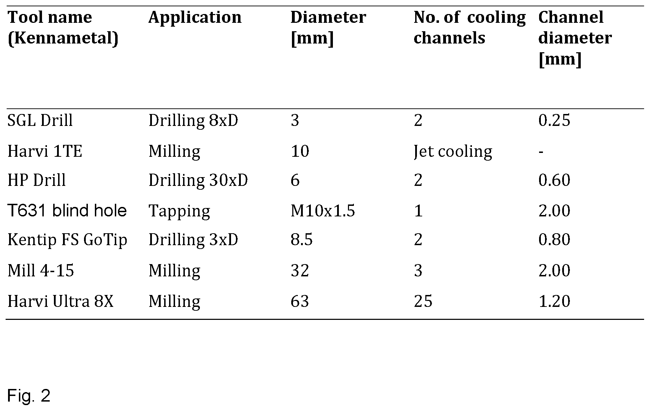

Using the installed flow sensors, flow characteristics of three milling, three drilling and one tapping tool were analyzed in air cutting (see Tab. 1). In each case, the flow rate and pump power were recorded at 16 pressure levels from 5 bar to 80 bar (see Fig. 2). The maximum flow rate of the tools ranges from about 2 l/min to 35 l/min at 80 bar. Hence, the tools represent the entire working range of the cutting fluid supply unit.

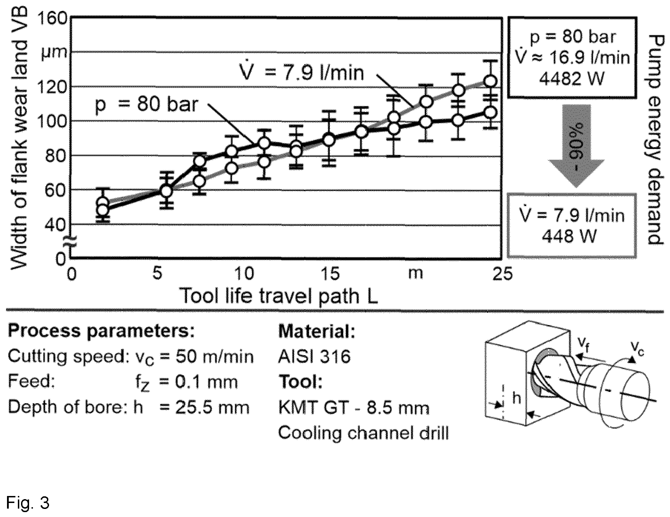

However, it can be noticed from Fig. 3 that the progression of the tool wear is more constant in case of flow rate control. The results also suggest a silghtliy lower standard deviation of the tool wear when the flow rate is reduced and the developed flow rate control is applied. Possible explainations for this observation can be found in fluid dynamics and more stable process conditions. When liquids emerge from nozzle-like structures, cavitations occur in the area of the nozzle outlet. For a pressure ratio (applied pressure to ambient pressure of the bore) smaller than 0.6, a two-phase flow is present at the outlet and thus cavitation in the nozzle outlet. [16] The increased occurrence of these micro-implosions, which are accompanied by high pressure peaks, can explain the observed outbreaks, which led to the tool life end under a pressure of 80 bar by chipping of the cutting edge. Cavitation is favored in particular by the fluctuations in the measured flow rate of approx. 12%, which lead to local differences in the pressure structure within the borehole.

## Claims

1. Machine tool with a coolant supply system comprising a coolant circuit transporting a fluid from a tank to the machine tool, with a pump as an actor and a flow meter as a sensor and a control system,
whereby the control system is connected to the machine tool and to at least to the one actor and at least to the one sensor, receiving sensor signals and generating control signals, whereby the control signal adjusted the pump performance according to the work task of the machine tool.

2. Machine tool according to claim 1, wherein a measuring range of the flow sensors is 1:400 and a flow control range is 1:400, in particular with a 0,1l/Minute minimum and 40l/Minute maximum controllable flow.

3. Machine tool according to claim 1 or 2, wherein the tool wear is reduced by regulating the flow rate to the machine tool, in particular by regulating a constant flow rate to the machine tool.

4. Machine tool according to claim 1 - 3 **characterized in that** the coolant circuit is connected after the pump with a connection line with a flow sensor and a controllable throttle for adjusting the flow to the tool machine in a range under a specific minimum flow value.

5. Machine tool according to claim 1 - 4, using a PI-controller, with a settling time less than 5 seconds.

6. Machine tool according to claim 1 - 5, using a PI-controller, with a settling time less than 3.5 seconds.

7. Machine tool according to claim 1 - 6, wherein multiple flow sensors are placed in series outside the machine tool, preferably in front of a double filter.

8. Machine tool according to claim 1 - 7, wherein the coolant circuit comprises a bypass circuit with a pump, a relief valve, a flow sensor and a tank, wherein the bypass circuit is connected to a control system to set a predetermined volume flow dependent on a selected machine tool.

9. Machine tool according to claim 7 and 8, wherein the multiple flow sensors are connected to the coolant circuit between the machine tool and the bypass circuit, in order to monitor and control the volume flow during processing of the machine tool.
